# FASCICULE DE BREVET EUROPEEN

(11) **EP 2 501 914 B1**
(45) Date de publication et mention de la délivrance du brevet: **16.10.2013**
(21) Numéro de dépôt: 10792998.6
(22) Date de dépôt: 16.11.2010
(51) Int. Cl.: F02C 7/32, F02C 7/275, F16D 11/10, F02C 7/36, F16D 11/00, F16H 63/30

(54) **DISPOSITIF DE CHANGEMENT DU RAPPORT DE TRANSMISSION ENTRE UN ARBRE DE TURBINE ET UN ARBRE D'UN DEMARREUR-GENERATEUR D'UN MOTEUR D'AERONEF**
VORRICHTUNG ZUM ÄNDERN DES ÜBERSETZUNGSVERHÄLTNISSES ZWISCHEN EINER TURBINENWELLE UND EINER ANLASSER-/GENERATORWELLE EINES FLUGZEUGMOTORS
DEVICE FOR CHANGING THE TRANSMISSION RATIO BETWEEN A TURBINE SHAFT AND A STARTER/GENERATOR SHAFT OF AIRCRAFT ENGINE

(30) Priorité: 18.11.2009 FR 0958154
(43) Date de publication de la demande: 26.09.2012
(73) Titulaire: Snecma, 75015 Paris (FR)
(72) Inventeur: GAULLY, Bruno, Robert, F-91630 Marolles En Hurepoix (FR)
(74) Mandataire: Boura, Olivier
(86) Numéro de dépôt international: PCT/FR2010/052432
(87) Numéro de publication internationale: WO 2011/061438

(56) Documents cités:
- EP-A1- 1 995 494
- GB-A- 1 106 980
- GB-A- 2 429 500
- US-A1- 2008 081 733

## Description

### Arrière-plan de l'invention

La présente invention se rapporte au domaine général des turbines à gaz et concerne plus particulièrement la commande d'un démarreur-générateur.

Le domaine d'application de l'invention est celui des turbines à gaz pour moteurs d'avions ou d'hélicoptères, ainsi que pour les groupes auxiliaires de puissance (ou APU pour « Auxiliary Power Unit »).

Dans une turbine à gaz, un certain nombre d'équipements, ou accessoires, sont entraînés par une transmission mécanique à partir d'une puissance mécanique prélevée sur un arbre de turbine. Cette transmission mécanique, qui est dénommée boîte de transmission ou boîte de relais d'accessoires, comprend un ensemble de pignons logés dans un carter et couplés mécaniquement à des accessoires. Ces derniers comprennent notamment diverses pompes pour la production d'énergie hydraulique, l'alimentation en carburant et la lubrification, ainsi que, sur certaines applications, un ou plusieurs démarreurs-générateurs électriques (ou S/G pour « Starter/Generator »). A travers la boîte de transmission, le régime du S/G est en particulier proportionnel au régime de fonctionnement du moteur, le coefficient de proportionnalité correspondant au rapport d'engrènement de la ligne d'engrenages sur la boîte de transmission.

Lorsque la turbine à gaz est en fonctionnement, le ou chaque S/G fonctionne comme un générateur électrique et produit une tension électrique qui alimente un ou plusieurs centres de distribution d'énergie électrique pour l'aéronef et son ou ses moteurs.

Lorsque la turbine à gaz est à l'arrêt ou à faible régime de rotation, un S/G peut fonctionner comme démarreur en étant alimenté par une source d'énergie extérieure afin de mettre en route la turbine à gaz par la mise en rotation de l'arbre de turbine auquel la boîte de transmission est connectée.

Les conditions mécaniques optimales de fonctionnement d'un S/G sont contradictoires selon qu'il fonctionne comme démarreur ou comme générateur.

En effet, pour une puissance mécanique donnée, lorsqu'un S/G fonctionne comme démarreur, on cherche à privilégier les vitesses de rotation élevées pour minimiser le couple du S/G tout en assurant un couple suffisant pour permettre le démarrage du moteur. En l'absence d'un changement de rapport d'engrènement, le recours à un rapport privilégiant les vitesses élevées en mode démarreur se traduirait par une forte plage de variation des vitesses en mode générateur, ce qui augmenterait la gamme de fréquence de ce dernier de manière préjudiciable à l'intégration du S/G au réseau de l'aéronef. En particulier, la borne supérieure pourrait être inadmissible (supérieure aux 800 Hz généralement admissibles sur certains avions commerciaux).

Le rapport d'engrènement entre l'arbre de turbine et le S/G est par conséquent choisi afin d'offrir un compromis possible entre les fonctionnements du S/G comme démarreur et comme générateur. Sur certains avions commerciaux, le mode générateur conditionne le rapport d'engrènement au détriment du mode démarreur.

Pour résoudre ce problème la demanderesse a proposé dans la demande de brevet n° 09 54 983, publié après la date de dépot de la présente demande, un système de commande d'un S/G dans lequel une boîte de vitesse est intercalée entre l'arbre de turbine et le S/G, le rapport d'engrènement de cette boîte de vitesse étant changé en fonction du mode de fonctionnement du S/G. Un tel système présente cependant l'inconvénient qu'il nécessite d'ajouter un dispositif de pilotage permettant de commander le changement du rapport d'engrènement de la boîte de vitesse.

Le document GB 2429500 A divulgue un dispositif de changement de rapport de transmission pour un moteur d'aéronef et représente l'état de l'art le plus proche.

### Objet et résumé de l'invention

La présente invention a donc pour but principal de pallier de tels inconvénients en proposant un dispositif de changement du rapport de transmission entre l'arbre de turbine et l'arbre d'un démarreur-générateur qui ne nécessite pas le recours à un dispositif de pilotage.

Ce but est atteint grâce à un dispositif de changement du rapport de transmission entre un arbre de turbine et un arbre d'un démarreur-générateur d'un moteur d'aéronef, comprenant :
un premier et un second pignons fixes portés par l'arbre du démarreur-générateur,
un premier et un second pignons fous portés par l'arbre de turbine et engrenant respectivement avec le premier et le second pignons fixes pour définir des rapports d'engrènement différents, et
un manchon de commutation intercalé entre les pignons fous et couplé mécaniquement à l'arbre de turbine, le manchon de commutation étant translatable sur cet arbre de turbine entre deux positions de couplage : une position dans laquelle il est engrené par le premier pignon fou et une position opposée dans laquelle il engrène le second pignon fou,
caractérisé en ce qu'il comprend en outre des moyens pour faire translater de façon automatique le manchon de commutation de l'une à l'autre de ses positions de couplage lorsque la somme des couples entre l'arbre de turbine et l'arbre du démarreur-générateur change de signe.

Pour faire translater le manchon de commutation de l'une à l'autre de ses positions de couplage, l'invention prévoit de profiter des points de fonctionnement du moteur pour lesquels la somme des couples entre l'arbre de turbine et l'arbre du démarreur-générateur change de signe. Ces points de fonctionnement correspondent aux moments où l'arbre du démarreur-générateur passe de menant à mené (vis-à-vis de l'arbre de turbine) et vice versa, c'est-à-dire lors des transitions entre les deux modes de fonctionnement du démarreur-générateur au cours du démarrage et de l'arrêt du moteur. Par ailleurs, le changement de rapport de transmission du dispositif selon l'invention s'effectue de façon automatique, c'est-à-dire qu'il ne nécessite pas de dispositif de pilotage particulier (du type actionneur électrique ou hydraulique) pour cette opération (le point de changement de rapport est pilotable par le niveau de couple du démarreur-générateur). Il en résulte un dispositif fiable, à faible masse et de coût réduit.

De façon avantageuse, les faces latérales du manchon de commutation portent chacune des crabots, chaque crabot ayant une première face plane qui est destinée à venir en prise contre une face plane de transmission de couple de dents portées par les pignons fous lorsque le manchon est dans ses positions de couplage, et une seconde face plane opposée à la première face qui est destinée, lorsque la somme des couples entre l'arbre de turbine et l'arbre du démarreur-générateur change de signe, à glisser sur une face plane de désaccouplement des dents des pignons fous qui est opposée à la face de transmission de couple.

La seconde face des crabots du manchon de commutation peut être sensiblement parallèle à l'axe de rotation du manchon de commutation, tandis que la face de désaccouplement des dents des pignons fous peut être inclinée par rapport à cet axe de rotation dans le sens de rotation dudit manchon.

Alternativement; la face de désaccouplement des dents des pignons fous peut être sensiblement parallèle à l'axe de rotation du manchon de commutation, tandis que la seconde face des crabots du manchon de commutation peut être inclinée par rapport à cet axe de rotation dans le sens de rotation dudit manchon.

Par ailleurs, dans un mode particulier de réalisation, la première face des crabots du manchon de commutation et la face de transmission de couple des dents des pignons fous sont sensiblement inclinées par rapport à l'axe de rotation du manchon de commutation dans le sens de rotation dudit manchon. Cette inclinaison favorise le maintien du manchon sur les pignons fous.

De façon avantageuse, le dispositif comprend en outre des moyens pour stabiliser le manchon de commutation dans ses positions de couplage.

L'invention a également pour objet un moteur d'aéronef comportant un arbre de turbine, un démarreur-générateur et un dispositif de changement du rapport de transmission entre l'arbre de turbine et un arbre du démarreur-générateur tel que défini précédemment.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est un schéma fonctionnel du dispositif de changement du rapport de transmission entre un arbre de turbine et un arbre d'un démarreur-générateur selon l'invention ;
- les figures 2A à 2D illustrent de façon schématique le principe de fonctionnement du dispositif de changement du rapport de transmission selon l'invention ;
- la figure 3 est une vue partielle et en perspective du dispositif de changement du rapport de transmission de la figure 1 ; et
- la figure 4 est une vue schématique de dessus d'un dispositif de changement du rapport de transmission selon un autre mode de réalisation de l'invention.

### Description détaillée de modes de réalisation

L'invention s'applique à tout type de moteur à turbine à gaz équipant les aéronefs, tels que par exemple les avions ou les hélicoptères.

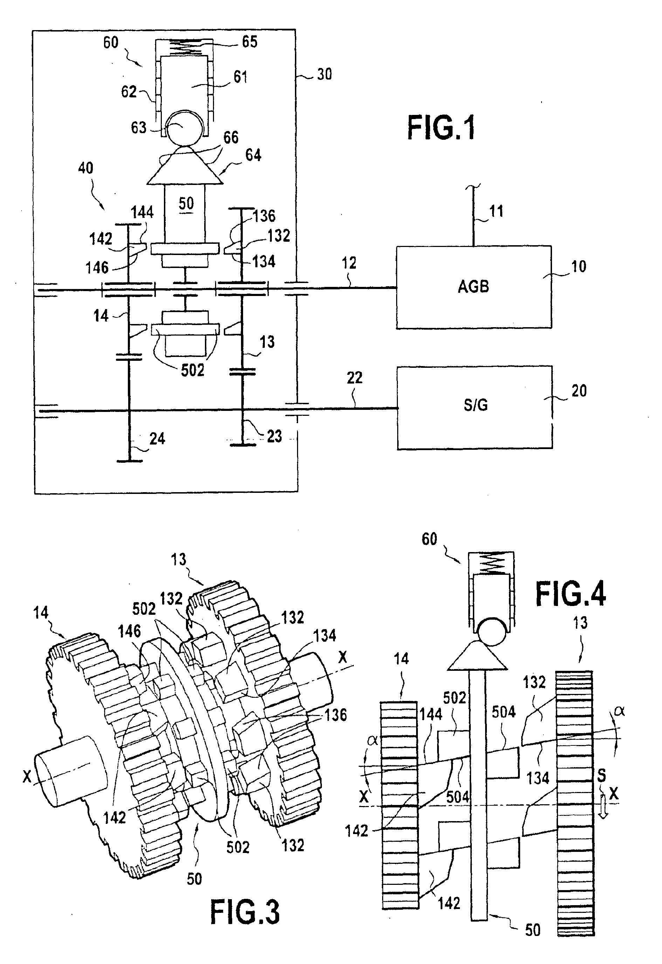

Dans le cas décrit ici en liaison avec la figure 1, on s'intéressera plus particulièrement à une turbomachine pour avion comportant une boîte de transmission 10 (ou AGB pour « Accessory GearBox ») qui sert à l'entraînement d'accessoires de la turbine ou d'équipements annexes, tels que diverses pompes pour la production d'énergie hydraulique, l'alimentation en carburant, la lubrification, etc, et en particulier à l'entraînement d'un démarreur-générateur 20 (ou S/G).

De façon connue en soi, l'AGB 10 se compose d'une pluralité de pignons (non représentés) qui sont entraînés en rotation par un arbre de transmission de puissance 11, ce dernier étant couplé mécaniquement à un arbre de turbine permettant de démarrer cette dernière (typiquement à l'arbre haute-pression de la turbomachine).

Le S/G 20 ainsi que son fonctionnement et sa régulation sont connus en soi et ne seront pas décrits ici. On pourra se référer par exemple à la publication FR 2,897,895 qui en donne une description détaillée.

La turbomachine comprend également un dispositif 30 selon l'invention permettant de changer de rapport de transmission entre l'arbre de turbine et l'arbre 22 du S/G 20.

Ce dispositif comprend notamment d'une boîte de vitesses 40 ayant deux arbres portant des pignons : l'arbre 22 du S/G qui porte un premier et un second pignons fixes 23, 24 et l'arbre 12 de l'AGB qui porte un premier et un second pignons fous 13, 14 engrenant respectivement avec le premier et le second pignons fixes.

Les premiers pignons 13, 23 définissent un rapport d'engrènement k1 qui est différent du rapport d'engrènement k2 défini par les seconds pignons 14, 24.

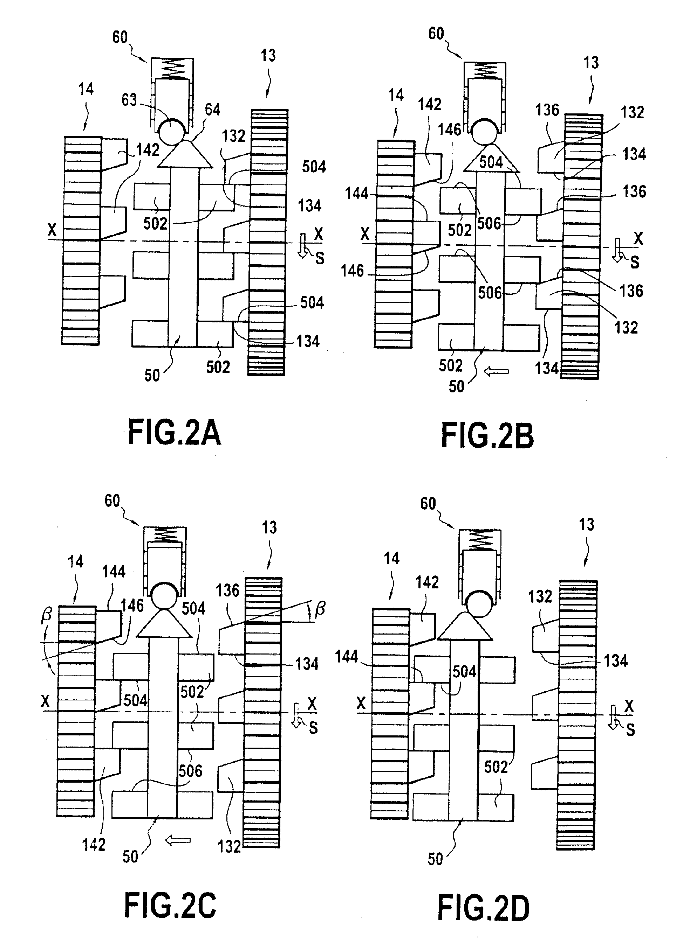

Un manchon de commutation 50 est intercalé entre les pignons fous 13, 14 et couplé mécaniquement à l'arbre 12 de l'AGB. Ce manchon de commutation est apte à translater sur cet arbre 12 (par exemple au moyen de cannelures non représentées sur les figures) entre deux positions de couplage : une position dans laquelle il est engrené par le premier pignon fou 13 (figure 2A) et une position opposée dans laquelle il engrène le second pignon fou 14 (figure 2D).

A cet effet, les faces latérales du manchon de commutation 50 portent chacune une pluralité de crabots 502 régulièrement répartis autour de son axe X-X de rotation. De même, les pignons fous 13, 14 comportent sur leur face latérale intérieure respective une pluralité de dents 132, 142 destinées à être engrenées par les crabots 502 du manchon de commutation lorsque celui-ci se trouve dans ses positions de couplage.

Plus précisément, chacun des crabots 502 du manchon de commutation 50 possède une première et une seconde faces planes qui sont opposées l'une à l'autre.

La première face plane 504 des crabots est destinée à venir en prise contre une face plane de transmission de couple 134, 144 des dents correspondantes 132, 142 des pignons fous 13, 14 lorsque le manchon de commutation est dans ses positions de couplage.

Les premières faces 504 des crabots et les faces de transmission de couple 134, 144 des dents peuvent être parallèles à l'axe de rotation X-X du manchon de commutation (cas des figures 1 à 3) ou bien être sensiblement inclinées par rapport à cet axe (cas de la figure 4). Dans ce second cas, l'inclinaison de ces faces 504, 134, 144 qui est schématisée par l'angle α sur la figure 4 est dirigée dans le sens de rotation S du manchon de commutation et peut être de l'ordre de 5° environ. Une telle inclinaison permet de favoriser le maintien du manchon sur les pignons fous.

Quant à la seconde face plane 506 des crabots 502, elle est destinée, lorsque le pignon fou 13, 14 engrené freine et que le manchon de commutation 50 prend de l'avance sur celui-ci, à glisser sur une face plane de désaccouplement 136, 146 des dents correspondantes 132, 142 des pignons fous, cette face de désaccouplement étant opposée à la face de transmission de couple 134, 144.

Pour obtenir un tel glissement, la seconde face 506 des crabots du manchon de commutation peut être parallèle à l'axe de rotation X-X du manchon de commutation, tandis que la face de désaccouplement 136, 146 des dents des pignons fous est inclinée par rapport à ce même axe. Cette inclinaison schématisée par l'angle β sur la figure 2C est dirigée dans le sens S de rotation du manchon et est comprise de préférence entre 45° et 60° environ.

Bien entendu, une disposition inverse pourrait amener au même résultat : dans un mode de réalisation non illustré, la face de désaccouplement des dents des pignons fous est sensiblement parallèle à l'axe de rotation du manchon de commutation, tandis que la seconde face des crabots du manchon de commutation est inclinée par rapport à cet axe de rotation dans le sens opposé au sens de rotation dudit manchon.

En liaison avec les figures 2A à 2D qui illustrent la boîte de vitesse en vue de dessus, on décrira maintenant le fonctionnement du dispositif selon l'invention.

Préalablement à l'actionnement de la commande de démarrage de la turbomachine, le manchon de commutation 50 est dans sa première position de couplage schématisée par la figure 2A (engrènement par le premier pignon fou 13).

Lors de l'actionnement de cette commande, le circuit de régulation du moteur (ou ECU pour « Engine Control Unit ») modifie l'excitatrice du S/G pour que celui-ci passe en mode démarreur. L'arbre 22 du S/G entraîne alors en rotation l'arbre 12 de l'AGB (par engrènement du manchon de commutation 50 par le premier pignon 13) et donc l'arbre de turbine afin de démarrer la turbomachine, cet engrènement s'effectuant selon le rapport d'engrènement k1.

Une fois la turbomachine démarrée, l'arbre de turbine (et donc l'arbre de l'AGB) va prendre de la vitesse. A un certain stade, la somme des couples entre l'arbre 12 de l'AGB et l'arbre 22 du S/G va changer de signe (l'arbre de l'AGB devient menant par rapport à l'arbre du S/G). Il résulte de ce changement que le manchon de commutation 50 (accouplé à l'arbre 12 de l'AGB) va avoir tendance à tourner plus rapidement que le premier pignon fou 13 (accouplé à l'arbre 22 du S/G) qui ralentit. Ceci se traduit par un déplacement angulaire relatif des crabots 502 du manchon de commutation par rapport aux dents 132 du premier pignon fou 13, déplacement opéré dans le sens S de rotation du premier pignon fou. Les secondes faces 506 des crabots 502 du manchon de commutation vont alors venir contre les faces de désaccouplement 136 des dents 132 du premier pignon fou 13 et glisser sur celles-ci, entraînant une translation axiale automatique du manchon vers le second pignon fou 14 (figures 2B et 2C).

Au bout de sa course axiale, le manchon de commutation va se trouver dans sa seconde position de couplage schématisée par la figure 2D (engrènement du second pignon 14 par le manchon de commutation 50). De façon plus précise, les premières faces 504 des crabots 502 de l'autre face latérale du manchon de commutation vont venir en butée contre les faces de transmission de couple 144 des dents correspondantes 142 du second pignon fou 14. Ainsi, l'arbre de turbine (et donc l'arbre 12 de l'AGB) va entraîner en rotation l'arbre 22 du S/G selon le rapport d'engrènement k2.

Bien entendu, au terme d'un processus identique, le manchon de commutation pourra revenir dans sa première position de couplage représentée sur la figure 2A dès que la somme des couples entre l'arbre de turbine et l'arbre du S/G changera à nouveau de signe. Ceci interviendra notamment à l'arrêt de la turbomachine au cours duquel l'arbre du S/G deviendra menant par rapport à l'arbre de l'AGB.

On comprend aisément de ce qui précède que la commutation du manchon de l'une à l'autre de ses positions de couplage s'effectue de façon automatique. En effet, la géométrie particulière des faces des dents des pignons fous et des crabots du manchon de commutation permet de « chasser » ce dernier vers l'un ou l'autre des pignons fous lorsque la somme des couples entre l'arbre de turbine et l'arbre du S/G change de signe.

Selon une caractéristique avantageuse de l'invention, le dispositif de changement du rapport de transmission comporte en outre des moyens 60 pour stabiliser le manchon de commutation 50 dans ses positions de couplage.

Comme représenté sur la figure 1, ces moyens 60 peuvent se présenter sous la forme d'une douille à billes 61 qui est montée coulissante à l'intérieur d'un bâti fixe 62 et dont la tête 63 vient en appui contre une came 64 formée sur la périphérie du manchon de commutation 50. La douille à billes est par ailleurs fixée à l'extrémité d'un ressort de rappel 65 dont l'autre extrémité est fixée sur le bâti. Le ressort de rappel est prétendu de sorte à maintenir la tête 63 de la douille à billes en permanence contre la came 64.

En outre, la came formée à la périphérie du manchon de commutation présente deux pentes 66 qui sont inclinées vers chacun des pignons fous 13, 14. Ainsi, les deux seules positions d'équilibre de la tête de la douille à billes sont définies par les deux positions de couplage du manchon de commutation. De la sorte, la présence de cette douille à billes permet de stabiliser le manchon de commutation dans ses positions de couplage. La douille à billes permet également de faciliter la translation du manchon afin d'en favoriser la commutation de l'une à l'autre de ses positions de couplage.

## Revendications

1. Dispositif de changement du rapport de transmission entre un arbre de turbine et un arbre d'un démarreur-générateur d'un moteur d'aéronef, **caractérisé en ce qu'**il comprend
un premier et un second pignons fixes (23, 24) portés par l'arbre (22) du démarreur-générateur (20) ;
un premier et un second pignons fous (13, 14) portés par l'arbre de turbine et engrenant respectivement avec le premier et le second pignons fixes pour définir des rapports d'engrènement différents;
un manchon de commutation (50) intercalé entre les pignons fous et couplé mécaniquement à l'arbre de turbine, le manchon de commutation étant translatable sur cet arbre de turbine entre deux positions de couplage : une position dans laquelle il est engrené par le premier pignon fou (13) et une position opposée dans laquelle il engrène le second pignon fou (14) ; et
des moyens pour faire translater de façon automatique le manchon de commutation de l'une à l'autre de ses positions de couplage lorsque la somme des couples entre l'arbre de turbine et l'arbre du démarreur-générateur change de signe.

2. Dispositif selon la revendication 1, dans lequel les faces latérales du manchon de commutation (50) portent chacune des crabots (502), chaque crabot ayant :
une première face plane (504) qui est destinée à venir en prise contre une face plane de transmission de couple (134, 144) de dents (132, 142) portées par les pignons fous (13, 14) lorsque le manchon est dans ses positions de couplage ; et
une seconde face plane (506) opposée à la première face qui est destinée, lorsque la somme des couples entre l'arbre de turbine et l'arbre du démarreur-générateur change de signe, à glisser sur une face plane de désaccouplement (136, 146) des dents des pignons fous qui est opposée à la face de transmission de couple.

3. Dispositif selon la revendication 2, dans lequel la seconde face (506) des crabots (502) du manchon de commutation est sensiblement parallèle à l'axe de rotation (X-X) du manchon de commutation, tandis que la face de désaccouplement (136, 146) des dents (132, 142) des pignons fous est inclinée par rapport à cet axe de rotation dans le sens de rotation (S) dudit manchon.

4. Dispositif selon la revendication 3, dans lequel la face de désaccouplement (136, 146) des dents (132, 142) des pignons fous (13, 14) forme avec l'axe de rotation (X-X) du manchon de commutation un angle (β) qui est compris entre 45° et 60°.

5. Dispositif selon la revendication 2, dans lequel la face de désaccouplement (136, 146) des dents (132, 142) des pignons fous (13, 14) est sensiblement parallèle à l'axe de rotation (X-X) du manchon de commutation, tandis que la seconde face (506) des crabots (502) du manchon de commutation est inclinée par rapport à cet axe de rotation dans le sens de rotation (S) dudit manchon.

6. Dispositif selon l'une quelconque des revendications 2 à 5, dans lequel la première face (504) des crabots (502) du manchon de commutation et la face de transmission de couple (134, 144) des dents (132, 142) des pignons fous sont sensiblement inclinées par rapport à l'axe de rotation (X-X) du manchon de commutation dans le sens de rotation (S) dudit manchon.

7. Dispositif selon la revendication 6, dans lequel première face (504) des crabots (502) du manchon de commutation et la face de transmission de couple (134, 144) des dents (132, 142) des pignons fous forment avec l'axe de rotation (X-X) du manchon de commutation un angle (α) qui est de l'ordre de 5°.

8. Dispositif selon l'une quelconque des revendications 2 à 7, comportant en outre des moyens (60) pour stabiliser le manchon de commutation (50) dans ses positions de couplage.

9. Moteur d'aéronef comportant un arbre de turbine, un démarreur-générateur (20) et un dispositif de changement du rapport de transmission entre l'arbre de turbine et un arbre (22) du démarreur-générateur selon l'une quelconque des revendications 1 à 8.

## Patentansprüche

1. Vorrichtung zur Änderung des Übersetzungsverhältnisses zwischen einer Turbinenwelle und einer Welle eines Starters/Generators eines Flugzeugtriebwerks, **dadurch gekennzeichnet, dass** sie umfasst
ein erstes und ein zweites festes Ritzel (23, 24), die von der Welle (22) des Starters/Generators (20) getragen sind,
ein erstes und ein zweites loses Ritzel (13, 14), die von der Turbinenwelle getragen sind und mit dem ersten bzw. dem zweiten festen Ritzel in Eingriff stehen, um unterschiedliche Eingriffsverhältnisse zu definieren,
eine Schaltmuffe (50), die zwischen den losen Ritzeln zwischengeschaltet und mit der Turbinenwelle mechanisch gekuppelt ist, wobei die Schaltmuffe auf dieser Turbinenwelle zwischen zwei Kuppelstellungen verschieblich ist, einer Stellung, in der das erste lose Ritzel (13) in sie eingreift und einer gegenüberliegenden Stellung, in der sie in das zweite lose Ritzel (14) eingreift, und
Mittel, um die Schaltmuffe automatisch von der einen in die andere ihrer Kuppelstellungen zu verschieben, wenn die Summe der Drehmomente zwischen der Turbinenwelle und der Welle des Starters/Generators ihr Vorzeichen ändert.

2. Vorrichtung nach Anspruch 1, wobei die Seitenflächen der Schaltmuffe (50) jeweils Klauen (502) tragen, wobei jede Klaue aufweist:
eine erste ebene Fläche (504), die dazu bestimmt ist, an einer ebenen Drehmomentübertragungsfläche (134, 144) von von den losen Ritzeln (13, 14) getragenen Zähnen (132, 142) in Eingriff zu gelangen, wenn die Muffe sich in ihren Kuppelstellungen befindet, und
eine der ersten Fläche gegenüberliegende zweite ebene Fläche (506), die dazu bestimmt ist, wenn die Summe der Drehmomente zwischen der Turbinenwelle und der Welle des Starters/Generators ihr Vorzeichen ändert, auf einer ebenen Auskuppelfläche (136, 146) der Zähne der losen Ritzel, welche der Drehmomentübertragungsfläche gegenüberliegt, zu gleiten.

3. Vorrichtung nach Anspruch 2, wobei die zweite Fläche (506) der Klauen (502) der Schaltmuffe zu der Rotationsachse (X-X) der Schaltmuffe im Wesentlichen parallel verläuft, während die Auskuppelfläche (136, 146) der Zähne (132, 142) der losen Ritzel gegenüber dieser Rotationsachse in der Drehrichtung (S) der Muffe geneigt ist.

4. Vorrichtung nach Anspruch 3, wobei die Auskuppelfläche (136, 146) der Zähne (132, 142) der losen Ritzel (13, 14) mit der Rotationsachse (X-X) der Schaltmuffe einen Winkel (β) zwischen 45° und 60° bildet.

5. Vorrichtung nach Anspruch 2, wobei die Auskuppelfläche (136, 146) der Zähne (132, 142) der losen Ritzel (13, 14) zu der Rotationsachse (X-X) der Schaltmuffe im Wesentlichen parallel verläuft, während die zweite Fläche (506) der Klauen (502) der Schaltmuffe gegenüber dieser Rotationsachse in der Drehrichtung (S) der Muffe geneigt ist.

6. Vorrichtung nach einem der Ansprüche 2 bis 5, wobei die erste Fläche (504) der Klauen (502) der Schaltmuffe und die Drehmomentübertragungsfläche (134, 144) der Zähne (132, 142) der losen Ritzel gegenüber der Rotationsachse (X-X) der Schaltmuffe in der Drehrichtung (S) der Muffe im Wesentlichen geneigt sind.

7. Vorrichtung nach Anspruch 6, wobei die erste Fläche (504) der Klauen (502) der Schaltmuffe und die Drehmomentübertragungsfläche (134, 144) der Zähne (132, 142) der losen Ritzel mit der Rotationsachse (X-X) der Schaltmuffe einen Winkel (α) bilden, der in der Größenordnung von 5° liegt.

8. Vorrichtung nach einem der Ansprüche 2 bis 7, ferner umfassend Mittel (60) zur Stabilisierung der Schaltmuffe (50) in ihren Kuppelstellungen.

9. Flugzeugtriebwerk, umfassend eine Turbinenwelle, einen Starter/Generator (20) und eine Vorrichtung zur Änderung des Übersetzungsverhältnisses zwischen der Turbinenwelle und einer Welle (22) des Starters/Generators nach einem der Ansprüche 1 bis 8.

## Claims

1. A device for changing the transmission ratio between a turbine shaft and a shaft of a starter-generator of an aeroengine, **characterized in that** it comprises:
· first and second fixed gear wheels (23, 24) carried by the shaft (22) of the starter-generator (20);
· first and second idler gearwheels (13, 14) carried by the turbine shaft, and meshing respectively with the first and second fixed gearwheels in order to define different gear ratios;
· a changeover sleeve (50) interposed between the idler gearwheels and mechanically coupled to the turbine shaft, the changeover sleeve being movable in translation on said turbine shaft between two coupling positions: a position in which it meshes with the first idler gearwheel (13), and an opposite position in which it meshes with the second idler gearwheel (14); and
means for causing the changeover sleeve to move in translation in automatic manner from either one of its coupling positions to the other one when the sum of the torques between the turbine shaft and the starter-generator shaft changes sign.

2. A device according to claim 1, wherein each of the side faces of the changeover sleeve (50) carries dogs (502), each dog having:
· a first plane face (504) for engaging against a plane torque-transmission face (134, 144) of a tooth (132, 142) carried by one of the idler gearwheels (13, 14) when the sleeve is in one of its coupling positions; and
· a second plane face (506) opposite from the first face and intended, when the sum of the torques between the turbine shaft and the shaft of the starter-generator changes sign, to slide over a plane decoupling face (136, 146) of a tooth of one of the idler gearwheels opposite from its torque-transmission face.

3. A device according to claim 2, wherein the second faces (506) of the dogs (502) of the changeover sleeve are substantially parallel to the axis of rotation (X-X) of the changeover sleeve, while the decoupling faces (136, 146) of the teeth (132, 142) of the idler gearwheels are inclined relative to said axis of rotation in the direction of rotation (S) of said sleeve.

4. A device according to claim 3, wherein the decoupling faces (136, 146) of the teeth (132, 142) of the idler gearwheels (13, 14) form an angle (β) with the axis of rotation (X-X) of the changeover sleeve, which angle lies in the range 45° to 60°.

5. A device according to claim 2, wherein the decoupling faces (136, 146) of the teeth (132, 142) of the idler gearwheels (13, 14) are substantially parallel to the axis of rotation (X-X) of the changeover sleeve, while the second faces (506) of the dogs (502) of the changeover sleeve are inclined relative to said axis of rotation in the direction of rotation (S) of said sleeve.

6. A device according to any one of claims 2 to 5, wherein the first faces (504) of the dogs (502) of the changeover sleeve, and the torque-transmission faces (134, 144) of the teeth (132, 142) of the idler gearwheels are substantially inclined relative to the axis of rotation (X-X) of the changeover sleeve in the direction of rotation (S) of said sleeve.

7. A device according to claim 6, wherein the first faces (504) of the dogs (502) of the changeover sleeve and the torque-transmission faces (134, 144) of the teeth (132, 142) of the idler gearwheels form an angle (α) with the axis of rotation (X-X) of the changeover sleeve, which angle is about 5°.

8. A device according to any one of claims 2 to 7, further including means (60) for stabilizing the changeover sleeve (50) in its coupling positions.

9. An aeroengine including a turbine shaft, a starter-generator (20), and a device for changing transmission ratio between the turbine shaft and a shaft (22) of the starter-generator according to any one of claims 1 to 8.
